# EUROPEAN PATENT APPLICATION

(11) **EP 4 345 748 A1**
(43) Date of publication of application: **03.04.2024**
(21) Application number: 22199202.7
(22) Date of filing: 30.09.2022
(51) Int. Cl.: G06T 7/30, G06T 15/04

(54) **COMPUTER-IMPLEMENTED METHOD FOR PROVIDING A LIGHTWEIGHT 3-DIMENSIONAL MODEL, A NON-TRANSITORY COMPUTER-READABLE MEDIUM, AND A DATA STRUCTURE**

(71) Applicant: SO REAL Digital Twins AG, 3084 Wabern (CH)
(72) Inventor: Lamboray, Edouard, 8046 Zürich (CH); Körner, Lars, 3012 Bern (CH); Chappuis, Sébastien, 3014 Bern (CH)
(74) Representative: P&TS SA (AG, Ltd.)

(57) **Abstract**

The invention relates to a computer-implemented method for providing a lightweight 3-dimensional model of a physical object (1), comprising the steps of:
a) receiving a first set and a second set of imaging data of the same physical object (1), wherein
the first set of imaging data comprises first surface data and volume data of the physical object (1), and the second set of imaging data comprises second surface data and texture data of the physical object (1);
b) registering the first surface data and the second surface data, with the registering being based on at least the volume data, wherein the registering provides registered first surface data and registered second surface data;
c) modifying the texture data based on at least the registering carried out in step b), and
d) texturing the registered first surface data with the modified texture data for providing the lightweight 3-dimensional model.

The invention also relates to a non-transitory computer-readable medium with a computer program and a data structure and/or a data repository system with at least one lightweight 3-dimensional model of a physical object.

## Description

### Technical domain

The present invention concerns a computer-implemented method for providing a lightweight 3-dimensional model of a physical object, a non-transitory computer-readable medium with a computer program for carrying out the computer-implemented method, and a data structure and/or a data repository system with at least one lightweight 3-dimensional model of a physical object obtained by carrying out the method.

### Related art

Three-dimensional (3D) models are widely used and are the most important carriers in computer-aided design or manufacturing applications. Classical 3D models often contain more information than is practically needed as for some given applications, which may occupy superfluous storage space in computers.

Current trends in games or metaverse applications, for instance, require 3D models that are lightweight and occupy less storage space when compared to classical 3D models. Such lightweight 3D models can be processed much faster and displayed without losing crucial structural or textural information.

The generation of such lightweight 3D models from physical objects still is challenging, especially when the corresponding lightweight 3D model needs to be almost photorealistic.

Different scanning technologies allow for the creation of 3D models of physical objects. But all scanning technologies have their limitations regarding which type of surfaces and/or materials can be scanned.

As a consequence, the fusion of data from different scanning technologies allows benefiting from the advantages of each involved technology and permits compensation for the shortcomings of a single technology.

On the other hand, specific algorithms and data formats are required to reduce the geometric resolution and real-time rendering complexity of the final 3D model.

The full resolution acquired during scanning can usually not be used in applications that require real-time streaming and rendering which is the case in games or metaverse applications.

Thus, the original data needs intelligent reduction methods which allow for creating lightweight 3D models from high resolution scan data, but still deliver high quality and high fidelity real-time renderings.

The fusion of data obtained from different scanning technologies enables the transfer of texture information from one 3D representation to the other and enables the creation of accurate but lightweight 3D representations of the scanned object.

However, current technologies have their limitations when two scanned 3D representations of the same physical object exist, but both 3D representations have significant differences.

A physical object can be a movable commodity item, but also another physical object such as a machine, a building, a furniture, etc.. The term physical object is well defined in the case law of many jurisdictions. Physical objects might also be referred to as physical items. However, humans or animals in part or in their entirety shall not be understood as physical objects/physical items in the context of this disclosure.

For instance, two 3D representations were scanned using different scanning technologies, leading to data points of a very different nature, mainly if different wavelengths of electromagnetic radiation are used or combined with tactile technologies.

On the other hand, variations in resolution, features, and/or bandwidths are present across the data sets.

Those variations, combined with the intrinsic measurement errors, do not allow for an easy alignment for physical objects of both inflexible and flexible nature.

The flexibility of a physical object possibly leads to deformations between individual scan passes. Thus the two representations of the same physical object are in most applications not one-to-one comparable.

An object of the present invention is the provision of a computer-implemented method for providing a lightweight 3-dimensional model of a physical object that overcomes the shortcomings and limitations of the state of the art.

### Short disclosure of the invention

According to a first aspect of the present invention, a computer-implemented method for providing a lightweight 3-dimensional model of a physical object, comprising the steps of: a) receiving a first set and a second set of imaging data of the same physical object, wherein the first set of imaging data comprises first surface data and volume data of the physical object, and the second set of imaging data comprises second surface data and texture data of the physical object, b) registering the first surface data and the second surface data, with the registering being based on at least the volume data, wherein the registering provides registered first surface data and registered second surface data, c) modifying the texture data based on at least the registering carried out in step b), and texturing the registered first surface data with the modified texture data for providing the lightweight 3-dimensional model is disclosed.

Step a) can also be referred to as the "receiving step", step b) can also be referred to as the "registering step", step c) can also be referred to as the "modifying step", and step d) can also be referred to as the "texturing step".

The computer-implemented method can be executed by a processing means on personal computers, centralized or decentralized server systems but also on mobile devices such as smartphones or mobile devices. The processing means can be a central processing unit, but also highly specialized processing units such as graphics- , physics- , or neuronal processing units. The processing means can receive the sets of imaging data via a data bus. The imaging data sets can be stored in a volatile or non-volatile memory composed in a computer device or decentralized storage, such as a cloud.

Each set of imaging data can be understood as a data object comprising a collection of one or more data points that create a meaning as a whole. Each set of imaging data can be acquired using different 3D scanning technology. The first set of imaging data can be acquired using a first scanning technology capable of providing the first surface data and volume data of the physical object. The first surface data and the volume data can be a 3-dimensional geometrical or volumetric representation of the surface and the inner structure of the physical object, respectively.

In contrast to this, the second set of imaging data can be acquired using a second scanning technology, capable of acquiring second surface data and texture data. At least the second surface data can be a 3-dimensional geometrical representation of the surface of the same physical object, whereby the texture data can contain further information about the texture of the surface of the same physical object, such as the surface roughness, pattern, color, etc..

The term "same" in respect to the same physical object shall define that the imaging data of the same physical object can be obtained in at least two different (consecutive) scanning steps but always relate to the same physical object.

Registration can be understood as determining a spatial transformation and/or mapping that relates positions (of data items) in the first set of imaging data, to corresponding positions in the second set of imaging data. Therefore, the registering step can comprise the transformation of the first and/or second surface data into one common coordinate system and the alignment of the said data in respect to each other, such that the geometrical representations nearly or perfectly match.

This step can be important, in particular when the same physical object is mechanically deformed between the acquisition of the two sets of imaging data. A deformed representation of the same physical object can be contained in and/or represented by the registered first surface data and/or registered second surface data.

The texture data can be modified in the modification step. This can be particularly necessary when the registered first surface data and/or the registered second surface data contain a deformed representation of the same physical object. The texture data can be adapted to fit the said representation. However, this step can also be required if the texture data contains more or even less data (or data points) compared to the registered first surface data and/or registered second surface data. In case of more data, the texture data can be reduced to a comparable amount of data. If it contains less data, the texture data might be enriched or fitted with additional texture data or texture information to a comparable amount of data.

The outcome of the texturing step is the provision of the lightweight 3-dimensional model. The lightweight 3-dimensional model can represent an outline model, where only the surface and the texture (including color, surface roughness, etc.) are visible. The lightweight 3-dimensional model can also include further volumetric information to embody a solid model. However, in this case, the 3-dimensional model might not be considered lightweight anymore.

In a further embodiment of the first aspect, the volume data can comprise material density data of the physical object. The material density data can be acquired using the first scanning technology. However, other technologies can be used alternatively or in addition to the first scanning technology to acquire material density data. The said material density data can be added to the volume data in a consecutive acquisition step. The material density data can provide information on the materials used or contained in different volumes concerning the physical object. Some physical objects may comprise a material with a low flexibility and high stiffness in an inner volume and a shell consisting of a material with high flexibility and low stiffness.

The first and the second surface data each can constitute 3-dimensional point clouds. However, they also can constitute polygonal meshes or voxel data, or any combination thereof. Point clouds can be converted into polygonal meshes or voxels or vice versa using methods known from the prior art.

In a further embodiment of the first aspect the registering step can comprise a step of rigidly registering the first surface data to the second surface data, wherein the rigid registering can provide rigidly registered first surface data and rigidly registered second surface data. The rigid registration can make use of an optimization algorithm to find the transformation that translates and rotates the first and second surface data onto each other until they (their representations of the same physical object) overlap well enough. This can comprise a geometry-based and/or voxel-based optimization.

The material density data can be used in this step to improve the accuracy of the registration, particularly the rigid registration. The material density data can provide information on the flexibility of the physical object. The rigid registration can use the material density and start with the alignment of the rigid registration in areas or volumes with the least flexibility. Areas or volumes with the least flexibility can be reliably aligned due to a lack of mechanical deformation.

In a further embodiment of the first aspect the registering step can comprise a step of non-rigidly registering the rigidly registered first surface data to the rigidly registered second surface data, wherein the non-rigid registering can provide the registered first surface data and the registered second surface data. A non-rigid registration can also be referred to as elastic image registration. The non-rigidly registering can be advantageous, in particular when the same physical object has been deformed between the two acquisition steps and the outcome of the rigid registration was not accurate enough to perfectly match or align the first surface data and the second surface data. The representation of the physical object comprised in the registered first surface data and the registered second surface data can be deformed by repositioning the surface data, more precisely, the data elements included in the surface data.

In a further embodiment of the first aspect the registering step can comprise a step of refining the first and the second surface data with the use of a non-rigid point-matching registration for providing the registered first surface data and the registered second surface data, whereby the non-rigid registration can be embodied as iterative non-rigid closest-point registration.

In a further embodiment of the first aspect the modifying step can comprise at least a first modification step and a second modification step for modifying the texture data comprised in the second set of imaging data, whereby the second modification step can be consecutive to the first modification step. The first modification step can be considered as basic texturing, whereby the second modification step can be understood as advanced or fine texturing.

In a further embodiment of the first aspect, the texture data and the registered first surface data can each comprise a plurality of data elements. Each data element can represent a position on the same physical object.

In a further embodiment of the first aspect, the first modification step, also referred to as basic texturing can comprise the step of projecting the texture data to the registered first surface data, by matching the plurality of data elements, for providing modified texture data.

In a further embodiment of the first aspect, the first surface data can comprise at least some surface data of the same physical object, which are not comprised by the second surface data. For instance, this can be the case when the first and second imaging data have been acquired using different scanning technologies. The resolution of the said technologies can be different, leading to a deviating amount of data or data points and/or some surfaces for scanning the same physical object were only accessible to one scanning device.

In a further embodiment of the first aspect, the second modification step can comprise the step of refining the modified texture data in case of a mismatch and/or in case of missing modified texture data by interpolating or otherwise enriching the plurality of data elements comprised in the modified texture data. Enriching can also include the displacement of the modified texture data to better detail the appearance of the lightweight 3-dimensional model. These approaches are known as normal mapping and bump mapping. Both can be used to enhance the modified texture data and finally the appearance of the lightweight 3-dimensional model.

In a further embodiment of the first aspect the modifying step can comprise a third modification step, which can be consecutive to the second modification step, for enriching the modified texture data with the use of a dataset of a texture library, for enhancing the modified texture data. The third modification step can also be necessary and useful in case of data deviation between the registered first surface data and the texture data.

In a further embodiment of the first aspect, the first and the second set of imaging data each can be created or obtained utilizing different scanning technologies. The first set of imaging data can be created or obtained by means of industrial computed tomography and the second set of imaging data by means of photogrammetry. Alternatively, the first set of imaging data can be created or obtained by means of microtomography or magnetic resonance imaging, whereby the list is not exhaustive.

The devices for obtaining the sets of imaging data can be devices specifically designed for industrial applications. In particular, an industrial computed tomography device may not be suitable for obtaining imaging data from a living human or animal because the radiation dosage may harm the said creatures. Because the first set of imaging data and the second set of imaging data can be obtained by different scanning technologies, the resolution of the imaging data sets might differ. Devices may directly output the first or second set of imagine data in a format that can be used to process the computer-implemented method as set out herein before. However, a post-processing can be necessary to bring the scanned raw data into a format suitable for carrying out the computer-implemented method.

In a further embodiment of the first aspect, the first and the second set of imaging data each can be created or obtained at different instants of time, whereby the same physical object can be deformed between the said instants of time. For instance, the physical object can be scanned on a first day using a first scanning technology for obtaining the first set of imaging data. On a second day, the same physical object can be scanned using a different scanning technology to obtain a second set of imaging data.

It needs to be noted that in all embodiments disclosed herein before the terms "obtaining", "creating, "acquiring", "generating" may be used interchangeably and needs to be interpreted in the sense and meaning of the related embodiment. Furthermore, all embodiments as disclosed herein before may be combined individually when technically feasible and useful. The steps of the method as set out herein before may be in consecutive order. However, any step may be processed in parallel to one another, or the order can be changed when technically feasible and useful.

In conclusion, the computer-implemented method of the first aspect of the invention can provide a lightweight 3-dimensional model of a physical object in a fast, reliable, and resource-saving way with high fidelity and can be particularly suitable for deformable physical objects.

According to a second aspect of the invention a non-transitory computer-readable medium comprising a computer program for carrying out the method according to the first aspect is disclosed. The second aspect may or may not include the step of creating the first and second set of imaging data. The computer-readable medium can be comprised or part of the computer devices as set out in one of the paragraphs of the first aspect of the invention.

According to a third aspect of the invention, a data structure and/or a data repository system comprising at least one lightweight 3-dimensional model of a physical object obtained by performing the method according to the first aspect is disclosed. The data structure and/or a data repository can be stored on a non-transitory computer-readable medium of a computer device, in a cloud or the like.

### Short description of the drawings

Exemplar embodiments of the invention are disclosed in the description and illustrated by the drawing in which:

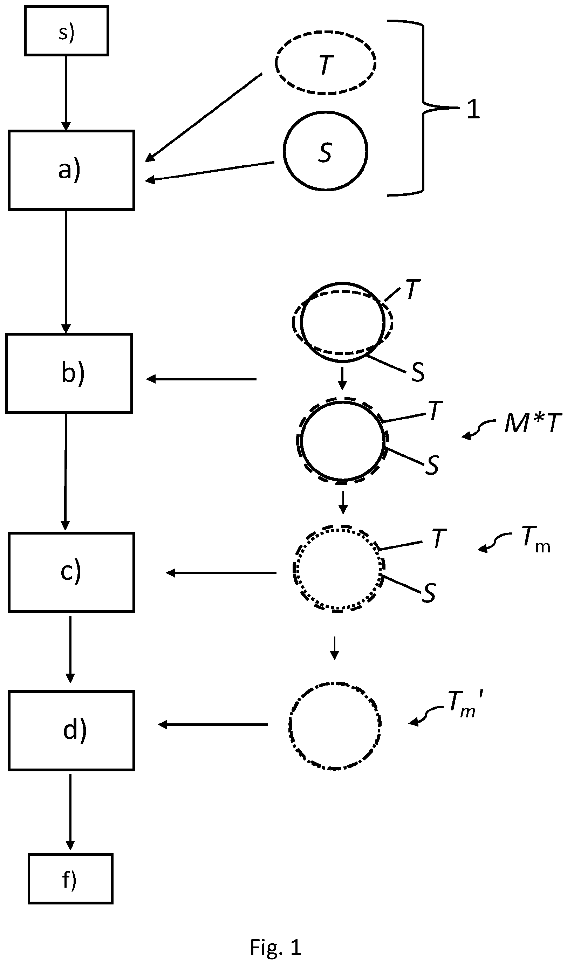

Figure 1 illustrates a sequence of the computer-implemented method schematically, according to the invention.

### Examples of embodiments of the present invention

With reference to Fig. 1 and starting from the top in step s) a physical object 1 is scanned using two different scanning technologies. Scanning is synonym for the process of analyzing the physical object with the use of appropriate tools to collect data on its shape, volume and/or its appearance.

For the first scan an industrial computed tomography device (iCT) is used. The result of the scan and a post-processing of the acquired data is a data object T containing 3-dimensional imaging data with information about the surface, the inner volume, and material density of the materials used for the physical object 1 in the inner volume. The second scan is conducted using a photogrammetry device like a digital camera. The result of the scan and a post processing of the acquired data is a data object *S* containing 3-dimensional imaging data with information about the surface (e.g. shape information) and the texture of the same physical object 1. The information contained in each data object T and *S* constitutes 3-dimensional point clouds. The data objects T and *S* are stored in a computer's non-volatile memory (e.g. flash memory), such as of a personal computer. However, it may also be possible that the data objects are directly loaded into the computer's volatile memory (e.g. random access memory) and are directly processed by its processor.

The data objects T and 5 contain a different coverage of the physical object's surface, which means that the method needs to focus on surface sample points (or surface elements eᵢ) present in both data objects T and 5 and finally in both representations of the physical object 1. In principle, data object T, in particular its surface data is the target 3D representation on which the texture data, comprised in the source representation of data object 5 should be projected.

In step a) the data objects *T* and *S* are loaded into the computer's volatile memory. The data objects *T* and *S* in Fig. 1 are represented for illustrative simplicity by two 2-dimensional circles. In reality, it is a 3-dimensional representation of the same physical object in the form of point clouds. The dashed line of the data object *T* in Fig. 1 shall indicate the lack of texture data in the data object *T*. As it can also be noticed, the data object *T* represents a deformed shape of physical object 1, as the physical object 1 has been compressed while conducting the first scan. In case of data object *T* being represented as a polygonal mesh, *T* contains a 2D parametrization of its 3D surface. Such a parametrization can be computed with methods known from the prior art. For polygonal meshes, like triangular or quad meshes, the 2D parametrization is usually defined as UV coordinates.

In step b) of the sequence, the data objects T and 5 are globally aligned and registered with a rigid alignment procedure, in particular, such that the data objects T and 5 are placed into the same coordinate system by aligning their surface data such that their volumes overlap as much as possible, e.g. by minimizing the distance between surface sample points of the 3-dimensional point clouds. This efficient rigid alignment procedure can be specifically useful for physical objects with a low flexibility, as the risk of a mechanical deformation during the two scans is relatively low.

For physical objects with a medium to high flexibility, an alternative approach of step b) can be useful, in which the global rigid alignment procedure for the data objects T and 5 focuses only on the volumetric regions that were identified as not being very likely for mechanical deformations, as the material density data comprised in data object T indicated low flexibility of volumes comprised in the physical object.

Alternatively or in addition, the use of a constrained procrustes superimposition can be used in the rigid alignment procedure to align the data objects *T* and *S* (their surface data) with each other. The rigid alignment procedure results in applying a Euclidian transformation on object *T*. As shown in Fig. 1 the surface data of the data objects *T* and *S* overlap after the transformation, but the surface data of data object *T* remains deformed.

In a consecutive step, a non-rigid fit M is applied to the data object T. *T* (the surface data) is deformed such that it matches data object 5 (the surface data). In this step, it can be necessary to mark distinctive data points in the surface data of the data object T.

Landmarks are placed manually by a user in data object T and preferably in the data object *S*. However, this can be done automatically by an algorithm. In a further possible implementation, feature points can be used and are computed from shape descriptors from the surface data of the data objects T and *S*. The shape descriptors are used equivalent to landmarks. One other approach consists of computing feature vectors or histograms with a local support region for a given sampling on both surface data of the data objects T and *S*. The resulting feature vector pairs or histogram pairs with the smallest distance given a specific error metric are considered as representing identical points on both surfaces. Those points are used equivalent to landmarks. In some implementations, the samples are placed uniformly, or evenly spaced, or chosen at the locations of decisive points, e.g. at the critical points of the eigenfunctions of the Beltrami-Laplace operator. Finally, an alternative approach accounts for the placement of the landmarks, which can be done automatically using an algorithm focusing on volumetric regions of the data object T, which were identified as being very likely to be deformed.

A transformed 3-dimensional reconstruction *M*T* is computed of the data object M based on the landmarks (or equivalent means) as set out hereinbefore. In particular, a mesh deformation of its surface data of data object T, is computed using a Radial Basis Functions (RBF) as an interpolation function to transfer the displacements known at the previously defined landmarks. The computation cost of RBFs can further be optimized by using data reduction or approximation schemes known from the prior art.

Referring to the 3-dimensional reconstruction *M*T* in Fig. 1, it can be noticed that the data objects T and 5 (their surface data) overlap, whereby the surface of data object T corresponds to the shape of the surface comprised in data object S. However, under the circumstance that the surface of data object 5 is deformed, the approach as outlined herein before can also be applied equivalent to match the surface data of data object 5 with the surface data of data object T.

In a consecutive step c) data object 5 and the transformed and deformed 3D reconstruction *M*T* are further refined by registering both surfaces with a non-rigid point matching algorithm. Not all point matching algorithms can handle two point sets with different resolutions. In this case, the original 3D reconstructions of data objects T and 5 need to be decimated in an optional step using an algorithm to create a common resolution *T*' and *S*'. Data objects *T*' and *S*' having a lower resolution than the minimum resolution of the data objects *T* and *S*. The data objects *T*' and *S*' (their surface and or texture data), can only comprise surface fragments which are covered in both surfaces of the data objects T and *S*. The non-rigid point matching algorithm is applied to the surface data of data objects T and 5 or in case the optional step was conducted to the surface data of the data objects *T*' and *S*'. A point-matching algorithm in the form of a non-rigid Iterative-Closest-Point (ICP) algorithm can be used, which is known from the prior art. A set L of corresponding pairs of coordinates are sampled on the surfaces of the data objects *T* and *S or T*' and *S*', respectively. Subsequently, a global transformation *M*ₗ in the form of a further data object for the coordinate pairs of L is computed. Based on the data object *M*ₗ a non-rigid space transformation *M*" being a further data object is computed for the surface data of the data objects *T* and *5 or T*' and 5', respectively. The data object M"can be calculated using the RBF as explained before. In a final step of step c) the surface of the data object T is transformed into the data object *T*ₘ using *M*", whereby the data object *T*ₘ comprises the registered surface data. Finally the registered surface data of the data object *T*ₘ is overlayed with the surface data of the data object 5, as indicated in Fig. 1 using dotted lines.

Step d) of the sequence can be understood as texturing step, in which the data object *T*ₘ is textured using i.e. texture information contained in the data object *S*. In an initial texturing step, textures from the data object 5 are projected onto the surface of the data object *T*ₘ. For each surface element eᵢ in the data object *T*ₘ, the corresponding surface element *ê*ᵢ in the data object 5, in particular in the surface data, is detected. The corresponding surface element *ê*ᵢ needs to be validated by plausibility criteria.

A possible approach is detecting the matching surface element *ê*ᵢ along the axis of the surface normal *n*ᵢ at *e*ᵢ. As a plausibility criterion, the angular difference between *n*ᵢ and *e*ᵢ*ê*ᵢ, i.e. the vector linking the two surface elements, can be analyzed. If the angular difference is too big, the match is discarded. For each valid match, the texture data comprised in the data object *S* at *e*ᵢ is copied or interpolated from *ê*ᵢ.

An alternative approach involves taking raw scan data comprised in the data object 5 and projecting the raw scan data onto data object *T*ₘ. From each surface element *e*ᵢ of the data object *T*ₘ, a ray *r*ᵢ is shot in the direction of the surface normal *n*ᵢ at *e*ᵢ. The texture data for *e*ᵢ is extracted or interpolated from all intersections points of *r*ᵢ with the oriented images from the photogrammetry captured with the data in the data object *S*. Now that object *Tₘ* is textured with the available and matching texture data from *S*, the same texture data can be transferred to the initial data object T. For structured data sets like point cloud or voxel data, the texture is transferred by copying the texture data from the data points of *Tₘ* to the corresponding data points on T. For unstructured data sets like polygonal meshes, the texture is transferred using the identical 2D parametrization which exists on the 3D surface of *T* and *Tₘ.*

After the initial texturing step, and is also part of step d) the texturing is almost completed. The surface elements *e*ᵢ on T, which do not have a corresponding surface element of the data object 5, are not yet textured. Some additional steps are required. For instance, surface elements *e*ᵢ on *T* which do not yet have a piece of associated texturing information are textured using an interpolation scheme, such as a flood fill algorithm. Alternatively, or in addition, the surface elements *e*ᵢ on *T* which are on a disjoint geometry component without a single textured surface element, are textured using additional input data, such as textured material data from a texture library. In most cases, the texture information provided by the data object 5 may be enriched or interpolated, as the said texture information might not cover all surfaced elements *e*ᵢ on T. The outcome of step d) is a data object T', with surface data that is properly registered and textured, as also illustrated in Fig. 1, by the overlayed dashed and dotted line.

In the optimal case, the texture information in the data object 5 contains all required texture channels for a photorealistic real-time rendering. But in many cases, e.g. if the data object *S*, in particular its surface data and texture data are the result of a standard photogrammetry workflow, not all texture channels might be available. In such situations, a more sophisticated approach might be selected to render the model of the physical object properly. A possible solution for polygonal meshes might be to use Physically Based Rendering (PBR), the standard approach for photorealistic rendering using lightweight 3D models nowadays. In particular, the method can focus on the PBR Metallic workflow, which contains as main texture channels the base color, the metalness, and the roughness of the surface/texture.

An alternative workflow can be the PBR Specular workflow, which has different texture channels (diffuse color, specular color, and glossiness). The texture maps for a PBR Specular workflow can be derived from the texture maps of the PBR Metalness workflow. Both workflows can contain additional texture channels, like the normal map. The normal map is used to add geometric details to a surface without describing those details with additional geometric primitives, like triangles or quads.

However, suppose no texturing information is available, e.g. on surface areas that a photogrammetry scan could not capture. In that case, the texture information can be retrieved from a PBR material dataset retrieved from a library. The selection of the dataset can be made manually or in a semi-automatic or fully automatic way. In particular, indications about the nature of the material can be retrieved from the industrial computed tomography device used in the first scan. In reverse, this knowledge can be used to select the material.

If only partial texture information is available from the scans, the missing information can be completed from the corresponding channels of an appropriate PBR material dataset retrieved from a library. Again, indications about the nature of the material can be retrieved from the industrial computed tomography device data and this knowledge can be used to select the material. As an example, a photogrammetry scan delivers the base color of the PBR material, the metalness and roughness values are completed from a library reference. Similarly, all other texture maps like opacity and emissive can be retrieved from a PBR material library and combined with the texture maps generated using the second scanning technique.

In many, if not all, above cases of step d), a normal map can be generated in a specific way. In general, a normal map for a low-resolution polygonal model is generated using a high-resolution polygonal model of the same data object. In this particular case, the normal map is generated from the high-resolution scan data obtained with an iCT device and applied to the low-resolution polygonal model, which is used in the lightweight representation of the 3D model.

Similar to the normal map, the scan data obtained with the industrial computed tomography device can also be used to compute other forms and formats, likebump maps, using the difference in geometric detail between the high resolution iCT scan and the low-resolution mesh of the lightweight 3D asset.

In a last step f) the data object *T*ₘ' is stored on a computer's non-volatile memory in the form (format) of the lightweight 3-dimensional model, representing the physical object in a photo-realistic way. The data object *T*ₘ' can be efficiently displayed in a real-time virtual environment, such as in the metaverse.

## Claims

1. Computer-implemented method for providing a lightweight 3-dimensional model of a physical object (1), comprising the steps of:
a) receiving a first set and a second set of imaging data of the same physical object (1), wherein
the first set of imaging data comprises first surface data and volume data of the physical object (1), and the second set of imaging data comprises second surface data and texture data of the physical object (1);
b) registering the first surface data and the second surface data, with the registering being based on at least the volume data, wherein the registering provides registered first surface data and registered second surface data;
c) modifying the texture data based on at least the registering carried out in step b), and
d) texturing the registered first surface data with the modified texture data for providing the lightweight 3-dimensional model.

2. Method of claim 1, wherein the volume data comprises material density data of the physical object (1), and wherein the first and the second surface data each preferably constitute 3-dimensional point clouds.

3. Method of claim 1 or 2, wherein step b) comprises a step of rigidly registering the first surface data to the second surface data, preferably with the use of material density data, the rigid registering providing rigidly registered first surface data and rigidly registered second surface data.

4. Method of claim 3, wherein step b) comprises a further step of non-rigidly registering the rigidly registered first surface data to the rigidly registered second surface data, the non-rigid registering to provide the registered first surface data and the registered second surface data.

5. Method of claim 4, wherein step b) comprises another step of refining the first and the second surface data with the use of a non-rigid point-matching registration for providing the registered first surface data and the registered second surface data, whereby the non-rigid registration preferably is embodied as iterative non-rigid closest-point registration.

6. Method of any of the claims 1 to 5, wherein modifying of step c) comprises at least a first modification step and a second modification step for modifying the texture data comprised in the second set of imaging data, whereby the second modification step being consecutive to the first modification step.

7. Method of any of the claims 1 to 6, wherein the texture data and the registered first surface data each comprises a plurality of data elements, each data element represents a position on the same physical object (1).

8. Method of claim 7, wherein the first modification step comprises projecting the texture data to the registered first surface data, by matching the plurality of data elements, for providing modified texture data.

9. Method of any of the claims 6 to 8, wherein the first surface data comprise at least some surface data of the same physical object (1) which are not comprised by the second surface data.

10. Method of claim 8 or 9, wherein the second modification step comprises refining the modified texture data in case of a mismatch and/or in case of missing modified texture data by interpolating the plurality of data elements comprised in the modified texture data.

11. Method of any of the claims 8 to 10, further comprising a third modification step, consecutive to the second modification step of enriching the modified texture data with the use of a dataset of a texture library, for enhancing the modified texture data.

12. Method of any of the claims 1 to 11, wherein the first and the second set of imaging data each being created by means of different scanning technologies, preferably the first set of imaging data by means of industrial computed tomography and the second set of imaging data by means of photogrammetry.

13. Method of any of the claims 1 to 12, wherein the first and the second set of imaging data each being created at different instants of time, whereby the same physical object (1) is deformed between the said instants of time.

14. A non-transitory computer-readable medium comprising a computer program for carrying out the method according to any of the claims 1 to 11.

15. A data structure and/or a data repository system comprising at least one lightweight 3-dimensional model of a physical object (1) obtained by performing the method according to any of the claims 1 to 13.
